(19) Europäisches Patentamt
European Patent Office
Office européen des brevets

(11) Publication number: **0 275 646 A1**

(12) # EUROPEAN PATENT APPLICATION

(21) Application number: **87310576.1**

(22) Date of filing: **01.12.87**

(51) Int. Cl.[4]: **C23F 11/10**, E21B 41/02

(30) Priority: **02.01.87 US 249**

(43) Date of publication of application: **27.07.88 Bulletin 88/30**

(84) Designated Contracting States: **BE DE ES FR GB IT NL**

(71) Applicant: **PETROLITE CORPORATION**
**369 Marshall Avenue**
**Saint Louis Missouri 63119(US)**

(72) Inventor: **Hausler, Rudolf H.**
**1812 Bopp Road**
**St. Louis Missouri 63131(US)**
Inventor: **Stegmann, Donald W.**
**7031 Pershing**
**St. Louis Missouri 63130(US)**

(74) Representative: **Seaborn, George Stephen et al**
**c/o Edward Evans & Co. Chancery House**
**53-64 Chancery Lane**
**London WC2A 1SD(GB)**

(54) **Carbon dioxide corrosion inhibiting composition and method of use thereof.**

(57) Compositions comprising a trithione and a phenanthridine composition are effective $CO_2$ corrosion inhibitors in oil and gas wells characterized as sweet systems, particularly in deep hot gas wells characterized as sweet systems.

EP 0 275 646 A1

Xerox Copy Centre

# CARBON DIOXIDE CORROSION INHIBITING COMPOSITION AND METHOD OF USE THEREOF

## BACKGROUND OF THE INVENTION

### 1. Field of the Invention

This invention relates to inhibition of corrosion of steel, iron and other ferrous metals which are exposed to the hostile environments of oil and gas production systems and, especially, of such hydrocarbon production systems characterized as "sweet", i.e., wells and flowlines wherein the environment comprises a high concentration of carbon dioxide, the pH is from about 2 to about 6 and the amount of $H_2S$ present is such that the $CO_2$ corrosion mechanism is predominant.

More particularly, the present invention relates to inhibition of $CO_2$ corrosion in oil and gas production tubing and to the use of corrosion inhibiting compositions which comprise a trithione and a reaction product of a hexahydropyrimidine with sulfur or a sulfur-containing compound (hereinafter referred to as phenanthridine composition).

Carbon dioxide is naturally occurring component in many oil and gas fields and, when $CO_2$ and water are produced with oil and/or gas, severe corrosion results in downhole and surface production equipment. Dry $CO_2$ is non-corrosive to metals and alloys. In the presence of liquid water, $CO_2$ forms carbonic acid which is highly corrosive. In fact, a solution saturated with $CO_2$ at 1 bar is many times more corrosive than hydrochloric acid at equal pH. Since most oil and gas production has either formation or condensed water associated therewith, the presence of $CO_2$ in a well is very detrimental.

The severity of $CO_2$ corrosion and its economic impact on oil and gas producing operations was first recognized in gas condensate wells in 1943. Since that time, numerous attempts have been made to eliminate the $CO_2$ corrosion problems, including using production tubing having a protective coating such as a thin film phenolic or expoxy-phenolic resin coating or expensive high alloy stainless steels; using non-metallic materials to fabricate the production tubing; and utilizing corrosion inhibitors. Use of corrosion inhibitors is the most practical, economical and generally accepted method for reducing or eliminating problems associated with $CO_2$ corrosion.

Most of the inhibitors used in the oil industry are organic chemicals which adsorb strongly on the metal surface of the production tubing and promote the formation of a protective oil film. These organic inhibitors normally have at least one highly polar group, which attaches to the metal surface, and a non-polar oil-soluble "tail" which facilitates formation of the protective oil film.

In order for a corrosion inhibitor to effectively solve the problems associated with $CO_2$ corrosion, such inhibitor must provide at least 98% protection and, preferably, at least 99% protection. Obviously, such inhibitors are rare. As indicated above, the effectiveness of an inhibitor depends on many factors, and such factors are unique to each system to be treated. These factors are so unique that, despite theoretical considerations, selection of $CO_2$ corrosion inhibitors continues to be entirely empirical and unpredictable. Furthermore, there are numerous secondary properties of corrosion inhibitors which must be taken into account in selecting $CO_2$ corrosion inhibitors. Such secondary properties include thermal stability, flowability, foaming characteristics, and emulsion tendencies.

It has now been discovered that a combination of a class of sulfur compounds known as trithiones with a class of compositions known as phenanthridine compositions provides sufficient protection against $CO_2$ corrosion to effectively solve, and in most cases substantially eliminate, the problems associated with $CO_2$ corrosion. Prior to the subject invention, it was thought that in order to utilize trithiones as corrosion inhibitors in oil and gas wells, the trithiones must be made water soluble. Thus, the present invention resides in the discovery that the trithiones can be effectively utilized in the subject system when combined with a phenanthridine composition. The combination of a trithione with a phenanthridine composition produces a composition which provides 99+% protection and is non-emulsifying and non-foaming and has excellent thermal stability and flowability characteristics.

### 2. Prior Art

Trithiones are known to inhibit corrosion in highly concentrated HCl systems wherein the pH is well below pH1 but such compounds are not effective when used alone in dilute HCl systems wherein the pH is between about 2 and about 6.

U.S. Patent No. 3,697,221 discloses quaternized trithiones which are water soluble and are useful as corrosion inhibitors in aqueous and/or aerated and/or highly acidic systems.

U.S. Patent Nos. 3,791,789 and 3,959,313 disclose oxidized trithiones which are also useful as corrosion inhibitors in aqueous and/or aerated and/or acidic systems.

U.S. Patent No. 3,959,177 discloses combinations of trithiones or quats thereof with thiophosphates or pyrophosphates containing both oxygen and sulfur, which combinations are useful for inhibiting metal-loss corrosion, stress cracking, hydrogen embrittlement or blistering and corrosion fatigue.

U.S. Patent Nos. 3,957,925 and 3,984,203 discloses S-(3-thione-propene-1) thiophosphates which are useful as corrosion inhibitors.

U.S. Patent No. 4,190,727 discloses hydroxy-substituted dithioliums (oxidized trithiones) which are useful as corrosion inhibitors.

U.S. Patent Nos. 2,816,075, 2,816,116 and 2,905,696 disclose trithiones useful as corrosion inhibitors in lubricating oils.

U.S. Patent Nos. 3,345,380, 3,350,408 and 3,394,146 disclose methods of preparing particular trithiones.

Auslegeschrift No. 1,038,866 discloses salts of trithione derivatives which can be combined with wetting agents for use as corrosion inhibitors in aqueous solutions.

U.S. Patent No. 4,446,056 discloses phenanthridine compositions which are useful as corrosion inhibitors in sweet systems.

## SUMMARY OF THE INVENTION

The present invention relates to inhibitors of $CO_2$ corrosion of ferrous metals by contacting the metals with a composition comprising a trithione and a phenanthridine composition in an amount effective to inhibit $CO_2$ corrosion thereof.

Accordingly, this invention is directed to $CO_2$ corrosion inhibiting compositions and to a method for inhibiting $CO_2$ corrosion of steel, iron and other ferrous metals.

## DETAILED DESCRIPTION OF THE INVENTION

In accordance with the present invention, the compositions which have been found to have utility as $CO_2$ corrosion inhibitors are characterized by the presence of a trithione and a phenanthridine composition.

Trithiones are known compounds which can be represented by the following general formula:

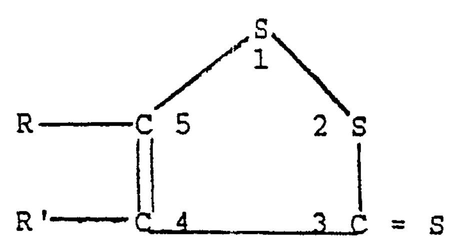

wherein R and R′ independently represent hydrogen and alkyl, aryl, cycloalkyl, alkenyl, alkynyl, alkaryl, aralkyl, and heterocyclyl radicals and the like. The radicals may be substituted by groups known to those skilled in the art to assist corrosion inhibition without adversely affecting the secondary characteristics of the base inhibitor. Thus, the above-described radicals may be sulfonated, oxyalkylated, aminated, etc., according to methods well known in the art. These compounds are also known as 1,2-dithiole-3-thiones, dithiacyclopentene thiones, tropylenes and 1,2-dithia-3-thioxo-cyclopent-4-ene derivatives.

Examples of suitable trithiones and methods for their preparation are disclosed in THE CHEMISTRY OF HETEROCYCLIC COMPOUNDS, "Multi-Sulfur and Sulfur and Oxygen Five-and Six-Membered Heterocycles, Part 1, pages 237-386, by David S. Breslow et al., Interscience Publishers, 1966. Numerous examples of trithiones are presented in the Breslow text in Table 4, pages 352-366. Examples of suitable trithiones and their preparation are also disclosed in U.S. Patent No. 3,791,789. Each of these references is incorporated herein by reference. It is contemplated that other trithiones having characteristics similar to those disclosed in the references will also be suitable for use in the present invention.

Other examples include higher molecular weight trithiones wherein R and R′ independently represent polyalkylenes, e.g., polyethylene, polypropylene, polybutylene, polyisobutylene, and the like. These high

molecular weight trithiones can be utilized where it is desired that the trithione exhibit very high thermal stability, e.g., thermal stability above 100°C. Preferred trithiones include 4-neopentyl-5-t-butyl-1,2-dithiole-3-thione and 4-polyisobutylene 1,2-dithiole-3-thione.

The trithiones of the subject invention include only those having the C=S group. Thus, the quaternary salts and the oxidized derivatives are expressly excluded. The C=S group is an important factor because it provides means for the trithiones to securely attach to the metal surface to provide a protective film which is relatively less susceptible to wash-off when subjected to high velocity conditions.

The phenanthridine compositions are known compositions and suitable compositions and methods for their preparation are disclosed in U.S. Patent No. 4,446,056, particularly, Examples 16-23, which patent is hereby incorporated by reference. These compositions are preferably prepared by reacting hexahydropyrimidines, or the precursors thereof, with sulfur or sulfur-containing compounds.

The subject compositions are prepared by formulating a trithione and a phenanthridine composition on a basis (by weight) of from about 90:10 to about 10:90, preferably, on a basis (by weight) of about 50:50.

The corrosion inhibiting compositions of this invention may be added to a well neat or as a solution thereof in an appropriate solvent, e.g., hydrocarbon solvent, and may be used in combination with other materials well known in anticorrosion formulations, e.g., biocides, oxygen scavengers, e.g., hydrazine, and the like. The subject compositions are preferably added to a well in an appropriate solvent, preferably a hydrocarbon solvent such as solvent 14 (xylene bottoms) and higher boiling solvents such as heavy aromatic solvents. The subject compositions are preferably injected downhole on a continuous basis using the solvent as a carrier.

It should be noted that where the high molecular weight trithiones, such as the polyisobutylene derivatives, are utilized, handling thereof is facilitated by adding a small but effective amount of a lower molecular weight trithione. Addition of the lower molecular weight trithione also facilitates dilution in the solvent utilized to carry the inhibitor composition downhole.

In general, a minor but effective amount of the subject compositions is employed to inhibit $CO_2$ corrosion in gas and oil wells and distribution systems, such as from about 1 to about 10,000 parts per million (ppm), preferably from about 500 to about 5,000 ppm, especially from about 20 to about 2,500 ppm, when added on a continuous basis. Larger amounts will be used if added on a batch-wise basis.

The following non-limiting examples are for illustrative purposes only and represent the best mode of practice of the invention.

In the following examples, the kettle test is used at a constant pH to determine the efficiency of the corrosion inhibiting compositions of the present invention. The corrosion rates determined by this test are considered to be steady state and predictive of expected field corrosion rates under similar conditions.

## Test Procedure

Utilizing a standard kettle, the temperature was maintained at about 55°C and $CO_2$ partial pressure was maintained at 1 bar. The medium utilized was distilled water and the pH was held constant at pH 3.8 by automatic injection of sulfuric acid. The solution was agitated at a rate of 800 rpm (estimated velocity of 3.5 m/sec.). The coupons utilized were sandblasted AISI-1018 coupons. A continuous $CO_2$ purge was maintained. Volume was one liter (volume to surface ratio was 37 cm). Duration was 24 hours. The corrosion rates were determined by iron analysis in solution for the period of from 2 to 24 hours.

## Example 1

To a mixture of 320 grams of sulfur and 6 grams of di-o-tolylguanidine, 336 grams of triisobutylene was added over a nine hour period at a reaction temperature of about 210°-215°C. Heating at 210°-215°C was continued for an additional 14 hours. The product was distilled and 220 grams thereof were collected and the product identified as 4-neopentyl-5-t-butyl-1,2-dithiole-3-thione.

## Example 2

A mixture of 200 grams cyclohexanone and 10 grams ammonium nitrate were placed in a pressure reactor. Ammonia gas was added with stirring and a pressure of 30-40 psi was maintained while keeping the reaction temperature between 50°-60°C. Stirring was continued for 10-24 hours (until the reaction

shows no sign of taking up more ammonia). When the reaction is over the stirrer was turned off and the mass upon settling separated into two layers. The lower viscous organic which was defined as 2.2.4.4-dipentamethylene 5,6-tetramethylene 2,2,4,5-tetrahydropyrimindine was charged to a 500 ml reactor equipped with stirrer, thermometer and an off-gas condenser attached to a Dean Stark trap. Four grams of nitric acid was added (10 grams ammonium nitrate can also be used) and the mixture was heated gradually to 190°-200°C for 5-6 hours while removing any water or low boiling distillate. Evolution of ammonia gas commenced at about 110°-120°C and was very strong at 150°C. The progress and completion of the reaction was followed by the decrease in the gas evolution and by the change in the infrared spectral characteristics, the peak at 6.02µ, -C=N, disappears and a strong new peak at 6.4µ (pyridine) appears. The final product (175 grams) was a dark very viscous liquid and is defined as 9-pentyl 1.2.3.4.5.6.7.8-octahydrophenanthridine.

To 100 grams of the intermediate pyrimidine prepared as described in Example 2. 10 grams sulfur and 5 grams ammonium nitrate was added and the mixture heated gradually to 190°-200°C for 6 hours. The resulting product was a dark very viscous stench liquid. Analysis showed ≧ 85% of sulfur charged present in the final product.

The following is an outline of the reactions occurring in Example 2:

Eq. 1

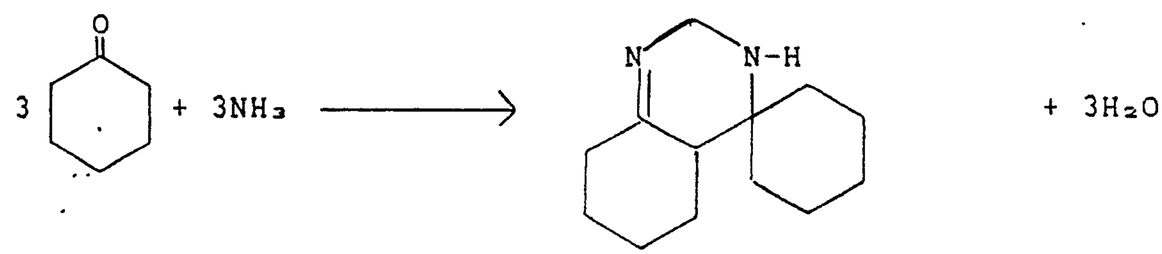


*Product a

*2,2,4,4-dipentamethylene 5,6-tetramethylene 2,2,4,4-tetrahydropyrimine

Eq. 2

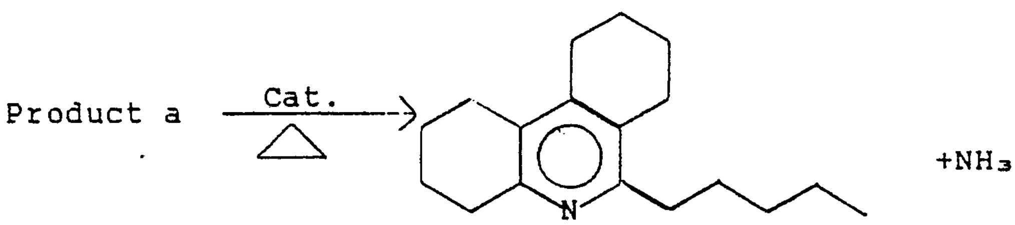


*Product b

*9-pentyl 1,2,3,4,5,6,7,8-octahydrophenanthridine

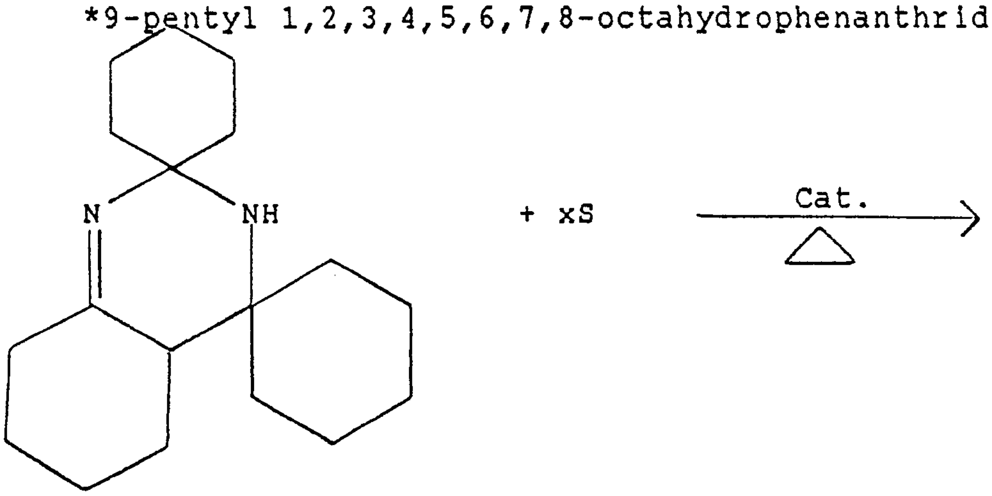


Eq. 3

continued

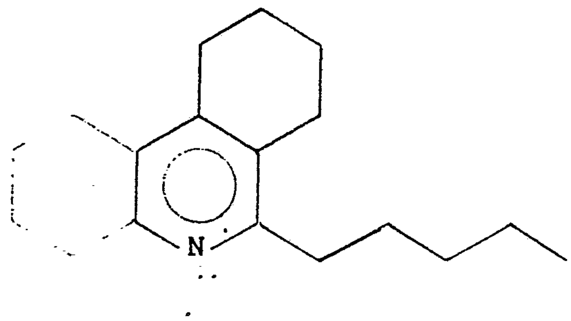 + 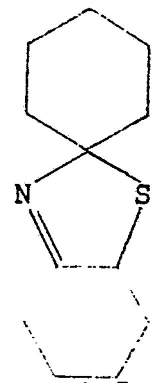 + $NH_3$

Phenanthridine

2,2-pentamethylene 4,5-tetramethylene-3-thiazoline

Example 3

The compositions of Examples 1 and 2 were formulated on a 1:1 basis.

The compositions of Examples 1-3 were tested in accordance with the constant pH kettle test described above. The results are set forth in Table I below.

TABLE I

| Example No. | Composition | ppm Composition | Steady State Corrosion Rate (mpy) | % Protection |
|---|---|---|---|---|
| 4 | Blank | ----- | 220 | ----- |
| 5 | Example 1 | 50 | 138 | 37.3 |
| 6 | Example 2 | 50 | 30 | 86.4 |
| 7 | Example 3 | 100 | 1.4 | 99.4 |

These examples demonstrate that the protection afforded by the compositions of the present invention is unexpectedly better than the additive protection of the separate components. Based on the results of the above, one would expect, when combining the compositions of Examples 1 and 2, that the steady state corrosion rate would be 18.8 mpy [(220) (1-.373) (1-.864)], and that the protection provided would be 91.4%. The actual protection afforded is greater than 99% and, based on the steady state corrosion rates, the subject compositions reduce the corrosion rate by more than a factor of 10 from 18.8 to 1.4.

It is contemplated that formulations comprising other trithiones as hereinbefore described and other phenanthridine compositions as hereinbefore described will inhibit $CO_2$ corrosion to a similar degree.

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which this invention pertains.

## Claims

1. Composition effective in inhibiting $CO_2$ corrosion comprising an effective amount of a trithione and an effective amount of a phenanthridine composition.

2. The composition of claim 1 wherein said trithione is 4-neopentyl-5-t-butyl-1,2-dithiole-3-thione.

3. The composition of claim 1 wherein said trithione is 4-polyisobutylene-1,2-dithiole-3-thione.

4. The composition of any of claims 1 to 3, wherein said phenanthridine composition is the reaction product of 2,2,4,4-dipentamethylene-5,6-tetramethylene-2,2,4,4-tetrahydropyrimidine with sulfur.

5. Method of inhibiting $CO_2$ corrosion of ferrous metals in gas and oil wells characterized as sweet systems comprising contacting said metals with an effective amount of a composition of any of claims 1 to 4.

European Patent Office

# EUROPEAN SEARCH REPORT

Application Number

EP 87 31 0576

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 339 349 (R.L. MARTIN)<br>* Claims 1,5,9 * | 1,2,4,5 | C 23 F 11/10<br>E 21 B 41/02 |
| D,Y | US-A-4 446 056 (N.E.S. THOMPSON)<br>* Claims 1,10; column 7, examples 17-19; column 11, lines 1-22; table 4, examples 17-19 * | 1,2,4,5 | |
| A | US-A-3 250 706 (W.E. KUHN)<br>* Claim 1 * | 1 | |
| D,A | US-A-3 959 313 (B.A. OUDE ALINK)<br>* Claims 1-5 * | 3 | |
| | | | TECHNICAL FIELDS SEARCHED (Int. Cl.4) |
| | | | C 23 F<br>E 21 B |

The present search report has been drawn up for all claims

| Place of search | Date of completion of the search | Examiner |
|---|---|---|
| THE HAGUE | 11-04-1988 | TORFS F.M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document